# EUROPEAN PATENT APPLICATION

(11) **EP 1 619 617 A1**
(43) Date of publication of application: **25.01.2006**
(21) Application number: 05076657.5
(22) Date of filing: 19.07.2005
(51) Int. Cl.: G06Q 10/00

(54) **Method, computer system and toolkit for implementing a business application**

(30) Priority: 19.07.2004 EP 04017026
(71) Applicant: SAP AG, 69190 Walldorf (DE)
(72) Inventor: Beringer, Joerg, 60431 Frankfurt (DE); Wood, Eric, Menlo Park, CA 94025 (US)
(74) Representative: Winckels, Johannes Hubertus F.

(57) **Abstract**

A method for implementing a business application on a computer system. The computer system has a context repository in which at least two context templates are stored. Each of the context templates represents a meta-model of a business situation. The system further has an action repository in which at least two action definitions are stored. The action definitions define at least an input or output of a service. The method includes instantiating a context based on a context template stored in the context repository, such that the instantiated context is a model of a business situation; associating at least one action definition with the instantiated context; and mapping at least one parameter of the instantiated context with at least one input or output parameter of the associated action definitions, for using the mapped parameter as input data to the service or outputting data from the service to the parameter when the business application is running.

## Description

### FIELD AND BACKGROUND OF THE INVENTION

The invention relates to a method, a computer system and a toolkit for implementing a business application on a computer system. The invention further relates to a business application. The invention further relates to a method and a computer system for running a business application.

Business applications running on programmable devices, such as computers, are known. These prior art applications aid users of the applications performing their activities within an enterprise. For example, a business application may guide a user through steps of a certain business process in a certain order, e.g. hiring a new employee. It is known to implement a business application using a multiple of services. For different steps in this process the business application may then provide the user with one or more services at the user interface, such as filling in and submitting a form to a database (e.g. with the new employees name address etc), and ordering items (e.g. a workplace for the new employee etc).

Typically, a service is implemented as a set of procedures or functions hosted on a computer server connected to the computer devices. A computer device on which the business application is running can request data from the computer server, by submitting a set of parameters to the set of procedures or functions on the server. It is known to implement services as Web services which allow a user of a web browser to request XML data from the server by submitting parameters to the server. Web services (sometimes called application services) are services (usually including some combination of programming and data, but possibly including human resources as well) that are made available from a business's Web server for Web users or other Web-connected programs. Web services range from major services like storage management and customer relationship management (CRM) down to much more limited services such as the furnishing of a stock quote and the checking of bids for an auction item.

With the transition from client-server based data base application paradigm to this service paradigm, applications can be more independent from the backend and theoretically support a more flexible recomposition of services to support new business processes. A new bread of business applications, Composite Applications, are an expression of this trend. The idea is to compose a new application based on existing services and components.

However, traditional ERP application development paradigms are not appropriate to do this. They are database centric, screen centric, or workflow centric but missing the concept of an independent composition layer and corresponding design times that solve the problem of retrieving a large number of services and put them into some context.

### SUMMARY OF THE INVENTION

It is a goal of the invention to provide a simplified method for implementing a service -oriented business application by means of a context models layer inbetween the persistence layer and the UI that enables even non expert programmers to extend and configure business processes. Therefore, according to a first aspect of the invention, a method according to claim 1 is provided.

With a method according to this first aspect, a business application can be implemented by a number of context models and executable actions that interface with each other in a standardized way to map data between the instantiated context and the action interface. Thus, when implementing a business application, the need to provide a multitude of specific interfaces to enable a transfer of data between communicating services is obviated.

In addition, the method requires less complex knowledge with respect to the technical details of the business application since the context template represents a meta-model of a business situation and the instantiated context is a representation of an actual business situation. Hence, knowledge of the business that is to be supported by the business application is sufficient, and the need to have a complex knowledge of the technical aspects of the services is obviated.

Furthermore, according to the first aspect, a toolkit according to claim 8 and a computer system according to claim 9 are provided, as well as a computer program product according to claim 10.

According to a second aspect of the invention, a method for running a business application according to claim 11 is provided. In such a method, services are able to transfer data to each other by simply transferring data from and to the instantiated context instead of via dedicated service-to-service interfaces. The instantiated context thus orchestrates the communication between different services. Accordingly, the method is less complex. Furthermore, the instantiated context is a representation of an actual business situation. Hence, information about a business situation can be provided at a user-interface by simply outputting data of the instantiated context. Furthermore, in case an aspect of the actual business situation changes, this can be entered in the computer system in an easy manner by modifying the parameter of the context which represents this aspect.

Furthermore, according to the second aspect, a business application according to claim 15, and a computer system according 16 are provided. Furthermore a computer network according to claim 17 is provided.

Specific embodiments of the invention are set forth in the dependent claims.

### BRIEF DESCRIPTION OF THE DRAWINGS

Further details, aspects and embodiments of the invention will be described, by way of example only, with reference to the attached drawings.
Fig. 1 schematically shows a block diagram of a computer system suitable for implementing a business application.
Fig 2 schematically shows an example of a context template, an action definition and a context instance.
Fig. 3 schematically shows a first example of a context template linked to actions definitions.
Fig. 4 schematically shows a second example of a context template linked to actions definitions.
Fig. 5 schematically shows a third example of a context template linked to actions definitions and to a user interface template.
Fig. 6 schematically shows a block diagram of a computer system provided with a business application according to the invention.
Fig. 7 schematically shows a block diagram of a Graphical User Interface suitable for in the example of fig. 5.

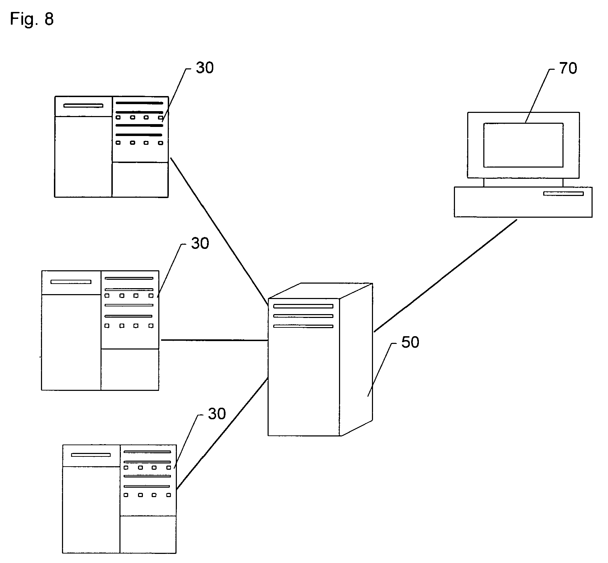

Fig. 8 schematically shows a block diagram of a computer network provided with a business application according to the invention.

### DETAILED DESCRIPTION OF EMBODIMENTS

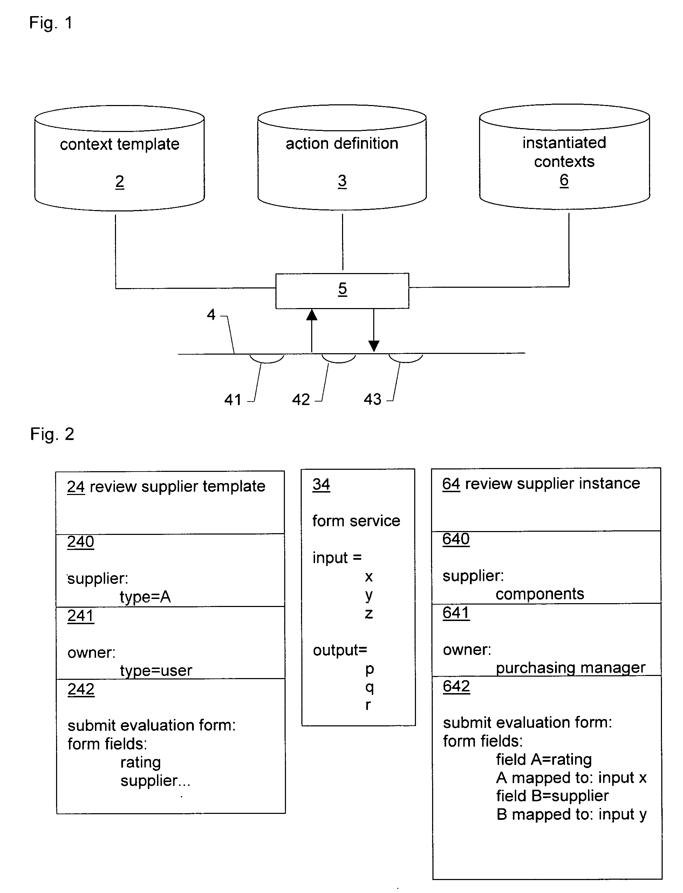

In fig. 1, a computer system 1 is shown. The computer system 1 includes a context template repository 2 and an action repository 3. The computer system further has an interface 4 which is provided with suitable controls 41-43, for implementing a service oriented business application. The interface 4 and the repositories 2,3 are communicatively connected to a processor 5.

In the context template repository 2, context definitions, also referred to as context templates, are stored. The context templates provide meta-data about a context and each context template represents a meta-model of a business situation. The context template defines the structure of the context, possible parameters, how the context and services interact in terms of parameters passing, etc.. The meta-model may define parameters related to a specific work context, such as artefacts used in the work context, actions which can be performed and people involved in the work context or any other suitable parameter.

A context template may e.g. represent an activity-centric meta-model. The context template then provides a meta-model of an activity within an enterprise, such as roles, objects, tasks, or events in a business situation. Depending on the specific type of activity, certain types of actions and resources may be used in a context and can be pre-configured in the context template. For example, an activity-centric meta-model may define that a user role is to be provided with certain information, such as work-lists, work status dashboards, resources, participants, and so on. The context template may for instance be a meta-model of collaborative activities in a business. In such case, the context template may for instance define parameters of a collaborative activity such as the parameters: initiator, participants, actions to be performed, and contain meta-data about these parameters. For example, the context template may define that the parameter initiator may have listed values only, e.g. of the type 'manager', 'delegate', etc..

The context template may for example represent an object-centric meta-model. The context template then provides a meta-model which is centred around an object in a business situation. For instance, the context template may be a meta-model of a business situation centred around a certain job. The context template may include object related operations as well as views on all facets on the object. Different job roles may be interested in different facets of the same object type.

The context template may for example represent a process-centric meta-model. The context template then provides a meta-model of a workflow in a business situation. Most actions are executed as predefined process steps. Because of the nature of workflow, selected steps may be owned by different users. The context template may then define, e.g., that a process has an initiator, and types of participants, which steps are to be performed by which types of participants, etc. The context template may further define that an initiator is of a type with a certain role in an enterprise, that the participants have a certain position within the enterprise etc.

When implementing a business application, a context template can be selected. The context template can then be instantiated, creating a context instance. When the context template is instantiated, an object which has the structure and parameters defined by the context template is created and values are assigned to the parameters. The instantiated context further represents a model of a business situation which conforms to the meta-model represented by the context template.

Fig. 2 for example schematically illustrates a supplier review context template 24. The supplier review context template 24 represents an activity centric meta-model. In the example of fig. 2, the activity around which the template 24 is centred is a review of a supplier. The context template 24 provides a meta-model of a review activity, and e.g. defines that such a model of a review process has parameters 241,242 of a certain type. E.g. in this example that an model of the type 'supplier review' has a 'supplier' parameter 240 of a type A, and an 'owner' parameter of type 'user' etc. The shown example of a context template 24 further defines that a review model uses certain services. In this example, the context template 24 defines an activity model of the type 'supplier review' requires submitting an evaluation form with certain fields. E.g. in this example, the context template 24 contains a service definition 242 which, inter alia, defines a form with form fields 'rating' and 'supplier'.

In the action repository 3, one or more action definitions are stored. The action definition contains at least a definition of the inputs and outputs of the action, i.e. the actions definition defines at least the input/output interface of an action. However, the action definition may also contain other information about an action, such as which other actions can be associated with the action, what the functionality of the action or other suitable information.

When implementing a business application which assists users in performing a review activity, the context template 24 is selected and instantiated resulting in a supplier review context instance 64. The supplier review context instance 64 has the parameters and structure defined by the context template 24, and values are assigned to the parameters. The supplier review context instance 64 represents a model of a business situation which conforms with the meta-model represented by the context template 24.

In this example, e.g. the supplier review context instance 64 provides a model how a supplier review process is performed. For example, the supplier review context instance 64 models that in a business environment, the review process is owned by a purchasing manager, and that a supplier of components is reviewed. The supplier review context instance 64 further models that in the review process, an evaluation form is submitted of which field A represents the supplier rating and field B represents an identification of the supplier.

When implementing the business application, one or more action definitions may be selected from the action repository 3 via the interface. The selected action definition is associated with the instantiated context. At least one parameter of the instantiated context is mapped with one or more input or output parameters of the selected action definition. In fig. 2, for instance, an action definition 34 is shown which defines inputs x,y, and z and outputs p,q and r of a form processing service. At run time of the business application, an action in accordance with the action definition is called from the context. The action then executes services, i.e. performs procedures or functions hosted on a computer server, and may e.g. return status information and result parameters to the context, generated a new context or perform other suitable functions.

For instance in the example of fig. 2, during implementation of the business application, the parameters of the evaluation form of the instance 64 are mapped to inputs of the form service definition 34. In this example, field A is mapped to input x, and field B is mapped to input y. The mapping is stored in the supplier review context instance 64, as shown in form field 642 of the supplier review context instance 64.

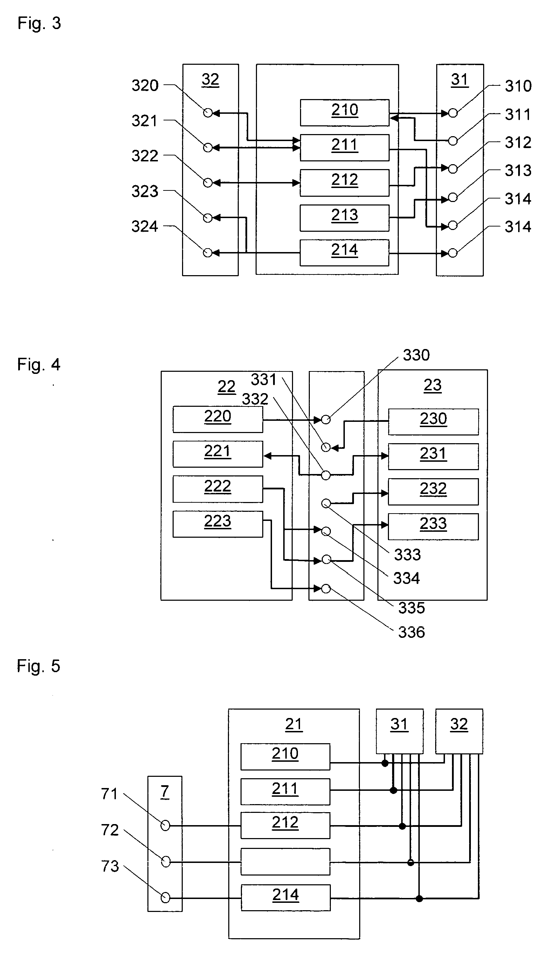

Fig. 3 illustrates a mapping of parameters of an instantiated context to input or output parameters of an action definition. An action definition may define that a certain service has inputs 311-315 and has an output 310 as for example shown in fig. 3. The parameters 210-214 of the instantiated context may then be mapped to the inputs 311-315 and the output 310. As shown in the example, parameters 210-214 are each mapped to a different one of inputs 311-315, and the output 310 is mapped to parameter 210. For another action definition 32, the parameters may be mapped differently, for example as shown in fig. 3.

Thus, in the example of fig. 3, in case the implemented business application is run on a suitable apparatus, a service in accordance with the action definition 31 will receive input data from parameters 210-214 via inputs 311-315, and output data to the instantiated context 21 via output 310. This output data will be received by a parameter of a context corresponding to parameter 210. The output of the service corresponding to the action definition 32 is thus provided to the context 21, which is modified thereby. The other action definition 32 can then use the modified context 21 to obtain input and/or to output data. In this example, the context 21 thus operates as a data exchange fabric for two or more actions. Accordingly, the necessity to match the input/output interfaces of the different services to each other is obviated and data can be transferred in a simple manner from one service to another service.

In the example of fig. 3, the inputs and/or outputs of the action definitions 31,32 are mapped to parameters of one context 21. However, it is also possible that when implementing a business application, inputs and/or outputs of an action definition are mapped to two or more contexts, e.g. as shown for example in fig. 4. In fig. 4 instantiated contexts 22,23. At run time, one of the contexts 22,23 can be selected and the selected context 22 can interact with actions according to the action definitions associated with the selected context.

As schematically shown in fig. 5, one ore more parameters of the instantiated context can be coupled to a user-interface definition 7. In fig. 5, the context 21 and the actions definitions 31,32 shown in fig. 2 are shown, and the parameters 212-214 are coupled to respective inputs 71-73 of a user-interface (UI) definition. The user-interface definition defines a UI corresponding to the definition 7. The UI definition 7 may for example define a template for a graphical user interface (GUI), such as which windows will be present in the GUI, what type of information has to be displayed in the windows etc. Thus, the parameters 212-214 coupled to the inputs 71-73 of the UI definition 7 are outputted in a UI of a computer system when the business application is running on the computer system.

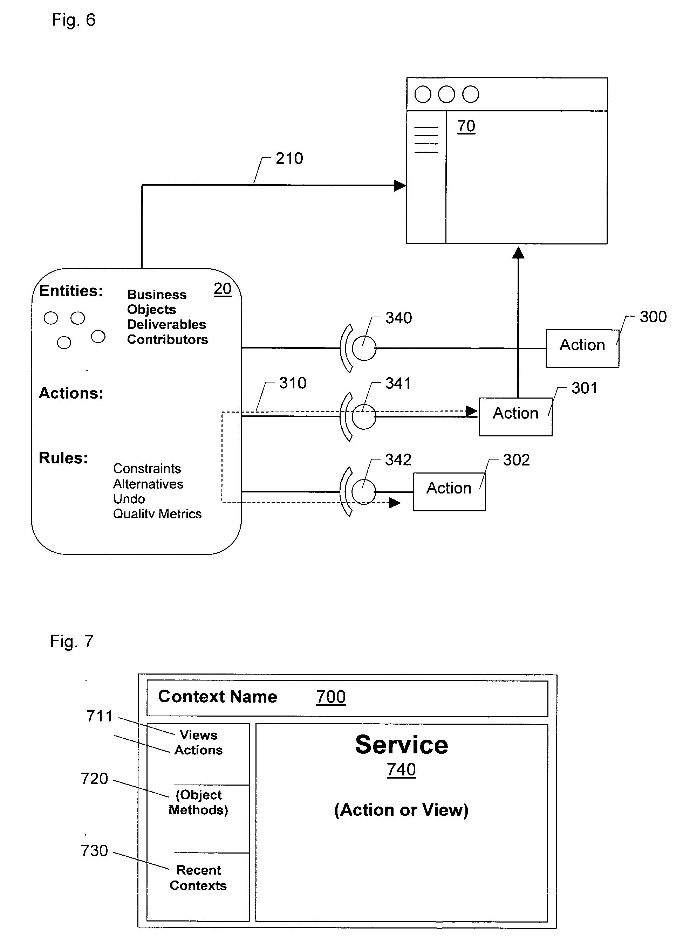

Fig. 6 schematically shows an example of a system on which an implemented business application is running. The system is provided with an instantiated context 20. When the business application is run, the parameters of the model represented by the instantiated context 20 are given values, such that the model represents an actual situation in a business environment. E.g. in the instantiated context 64 shown in fig. 2, the supplier is given a name of an actual supplier of components, the owner is given a value representing an employee of an enterprise etc.

As indicated with the line 201 the context is connected to a user-interface, in this example a GUI 70. Parameters of the context 20 have been mapped to the inputs of a UI definition during implementation of the business application. The GUI 70 conforms with the UI definition 7. Thus, when the implemented business application is running, parameters of the context 20 are coupled to the GUI 70 and parameters of the contexts 20 can be outputted visually in the GUI 70. Thereby, a user can perceive a current state of the context 20, for example which persons are contributed in the specific context, which actions can be performed in the context etc.

The contexts 20,21 are further connected to actions 300-302 via plug-and play interfaces 340-345. During implementation, for parameters of the instantiated context are mapped to inputs and or outputs of action definitions. The actions 300-302 conform with these action definitions. Thus, for each respective actions 300-302 , the contexts are immediately ready to receive or send data to the actions 300-302 when the business application is run.

In this example, as indicated with the dashed lines 301,311 the actions can exchange data via the context 2. To that end, the context 20 is connected to more than one action in a manner as explained above with reference to fig. 3. For example, a first action 300 can for example output data to the context 20, thus modifying the context 20. A second action 301 can use parameters from the modified context, and thus receive data from the first action 300. Since the communication of data between the actions is lead via the context, the interfaces of the actions do not have to be matched to each other.

Fig. 6 schematically shows a GUI suitable to be used in the example of fig. 5. The GUI has a context information window 700 in which information about the current context is displayed. In this example in the context information window 700 the name of the current context is visually outputted. However, the context information window 700 may likewise contain other suitable information about the current context.

The GUI 70 further has a control window provided with controls 710,711,720 and 730. An action control 710 allows a user of the system to view actions linked to the current context. For example, the action control 710 can provide the user with a sequence of actions used to perform successive steps in a business process related to the current context. Via a view control 711, a user can select a view of the current context. For example, by selecting the view control, a list of participant in the current context is outputted in the service window 740 or any other suitable parameter of the current context. An object/method control 720 allows a user to control or select objects or methods of the current context. A recent context control 730 visually outputs which contexts have been used recently, and allows a user to select one of the recently used contexts.

Fig. 7 schematically shows a computer network suitable for running the business application shown in fig.5. The computer network includes a number, in this example three, server systems 30. Each of these server systems 30 is communicatively connected to a context server 50. On the server systems 30 a set of procedures or functions are hosted which provide an action to the context server 50. The context server 50 can request data from the computer server, by submitting a set of parameters to the set of procedures or functions on the server. On the server 50 two or more contexts are present, and the server 50 is arranged to submit parameters of a selected context to the actions provided by the server systems 30 or to receive data from the server systems and adjust the selected context in correspondence with the received data. The context service 50 is further connected to a computer system provided with a GUI 70 on which aspects of the selected context and/or the actions can be outputted visually, as explained with reference to fig. 6.

The invention may also be embodied in a toolkit for implementing a business application. The toolkit may have a context repository in which at least two context templates are stored, each of the context templates defining actors in a work context. The toolkit may further have an action repository in which at least two action templates are stored, which action templates define at least an input or output of a service. The toolkit may further have a context instantiation component for instantiating a context based on a context template stored in the context repository. The toolkit may further have an action association component for associating at least one action template with the instantiated context. The toolkit may further have a mapping component for mapping at least one parameter of the instantiated context with at least one input or output of the associated action templates, for using the parameter as input to the service or outputting data from the service to the parameter when the business application is running.

The invention may also be embodied in a computer system provided with a toolkit, the computer system comprising at least one memory in which the context repository and the action repository are stored, and at least one processor communicatively connected to the memory, the at least one processor including the context instantiation component, the action association component and the mapping component. A computer (system) includes any type of programmable apparatus such as a desktop computer, a personal digital assistant, a (mobile) telephone or any other suitable type of programmable device. A computer (system) may include one or more of such devices communicatively connected in a suitable manner. To provide for interaction with a user, a computer system can be used having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

The invention may also be embodied in a business application, including a computer program product with code portions representing at least one instantiated context based on a context template stored in a context repository; and representing at least one input/output interface for transferring data from the instantiated context to an associated service or vice versa, wherein at least one parameter of the instantiated context is connected to the input/output interface, for inputting the aspect to the service or outputting data from the service to the aspect when the business application is running on a computer.

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. Also, for example, the parameter and/or inputs and/or outputs of the contexts and action definitions described in figs. 2 and 3 may be mapped differently depending on the specific implementation.

The mere fact that certain measures are recited in mutually different claims does not indicate that a combination of these measures cannot be used to advantage.

## Claims

1. A method for implementing a business application on a computer system, the computer system including:
a context repository in which at least two context templates are stored, each of the context templates representing a meta-model of a business situation;
an action repository in which at least two action definitions are stored, which action definitions define at least an input or output of a service;
the method including:
instantiating a context based on a context template stored in the context repository, such that the instantiated context is a model of a business situation;
associating at least one action definition with the instantiated context; and
mapping at least one parameter of the instantiated context with at least one input or output parameter of the associated action definitions, for using the mapped parameter as input data to the service or outputting data from the service to the parameter when the business application is running.

2. A method according to claim 1, further including: associating at least one parameter of the instantiated context to a user-interface, for outputting the at least one parameter in the user-interface when the business application is running.

3. A method according to claim 1 or 2, wherein the work instance is a real work instance.

4. A method according to any one of the preceding claims, including instantiating at least two contexts, and providing a data interface between the instantiated contexts, for enabling an exchange of data between the instantiated contexts when the business application is running.

5. A method according to claim 4, including associating at least one action with at least two of the contexts, such that the actions provide the exchange of data when the business application is running.

6. A method according to any one of the preceding claims, wherein the context templates includes at least one of: types of participants, status data and actions associated with the business state.

7. A method according to any one of the preceding claims, wherein the context templates are linked to at least one type of user, and context templates linked to the same type of user are instantiated.

8. A toolkit for implementing a business application, including:
a context repository in which at least two context templates are stored, each of the context templates defining actors in a work context;
an action repository in which at least two action definitions are stored, which action definitions define at least an input or output of a service, and
a context instantiation component for instantiating a context based on a context template stored in the context repository;
an action association component for associating at least one action definition with the instantiated context; and
a mapping component for mapping at least one parameter of the instantiated context with at least one input or output of the associated action definitions, for using the parameter as input to the service or outputting data from the service to the parameter when the business application is running.

9. A computer system provided with a toolkit according to claim 8, the computer system comprising at least one memory in which the context repository and the action repository are stored, and at least one processor communicatively connected to the memory, the at least one processor including the context instantiation component, the action association component and the mapping component.

10. A computer program product, including code portions for performing a method according to any one of claims 1-7 when running on a computer.

11. A method for running a business application, including:
providing a memory in which at least one context is stored, which context is a model of a business situation;
providing an interface between the context and at least one action server; transmitting data from an output parameter of the context to an input of the first action server via the interface;
performing in response to the transmitted data at least one action by the first action server;
receiving at the interface data from an output of the first action server, which data results from the performed action; and
modifying at least one receiving parameter of the context with the received data, which parameter is mapped to said output of the first action server.

12. A method according to claim 11, wherein the memory contains at least two contexts, each modelling a different business situation and the method including selecting one of said contexts.

13. A method according to claim 11 or 12, including transmitting at the interface data to an input of a second action server, said data originating from a parameter mapped to that input;
performing at least one action in response to the transmitted data by the second action server;
receiving at the interface data from an output of the second action server, which data results from the performed action; and
modifying at least one parameter of the context with the received data, which parameter is mapped to said input

14. A method according to any one of claims 11-13, wherein the context contains a representation of a business situation

15. A business application, including a computer program product with code portions representing at least one instantiated context which instantiated context represents a business situation, the code portions further representing at least one input/output interface for transferring data from the instantiated context to an associated service or vice versa, wherein at least one parameter of the instantiated context is connected to the input/output interface, for inputting the aspect to the service or outputting data from the service to the aspect when the business application is running on a computer.

16. A computer system, provided with a business application according to claim 11.

17. A computer network including at least one computer system according to claim 16 and at least one action server connected to the computer system for providing an a service in accordance with an action definition associated with a context on the computer system.
